# EUROPEAN PATENT APPLICATION

(11) **EP 4 521 525 A1**
(43) Date of publication of application: **12.03.2025**
(21) Application number: 24198546.4
(22) Date of filing: 05.09.2024
(51) Int. Cl.: H01M 50/213, H01M 50/242, H01M 50/291

(54) **BATTERY CELL HOLDER AND BATTERY MODULE INCLUDING THE SAME**

(30) Priority: 05.09.2023 KR 20230117639
(71) Applicant: SAMSUNG SDI CO., LTD., Yongin-si, Gyeonggi-do 17084 (KR)
(72) Inventor: Hong, Seungjoon, 17084 Yongin-si, Gyeonggi-do (KR)
(74) Representative: Gulde & Partner

(57) **Abstract**

A battery cell holder includes a plurality of partition walls defining an insertion hole into which a battery cell is inserted, a plurality of support walls positioned between the plurality of partition walls, and a plurality of protrusions formed on the plurality of partition walls, wherein a distance between a center of the insertion hole and the plurality of support walls may be less than a distance between the center of the insertion hole and the plurality of protrusions.

## Description

### BACKGROUND

### 1. Field

One or more embodiments relate to a battery cell holder and a battery module including the same.

### 2. Description of the Related Art

Secondary batteries refer to batteries that can be charged and discharged, unlike primary batteries that cannot be recharged. Secondary batteries are used as energy sources for mobile devices, electric vehicles, hybrid vehicles, electric bicycles, and uninterruptible power supplies and may be used in the form of a single battery, depending on the type of an external device to which they are applied, or in the form of a module in which multiple batteries are connected to form a single unit.

In addition, as secondary battery applications require increasingly larger capacities, the size of battery cells is gradually increasing to increase energy density. For example, in the case of a plurality of circular cells, the diameter and height are gradually increasing, and as battery cells become larger, damage to the battery cells due to volume changes during charging becomes a problem.

The above-mentioned background technology is technical information that the inventor possessed for deriving the present invention or obtained in the process of deriving the present invention, and may not necessarily be said to be known technology disclosed to the general public before filing the application for the present invention.

### SUMMARY

One or more embodiments include a battery cell holder and a battery module including the battery cell holder, wherein the battery cell holder is configured to prevent (or at least mitigate) damage to a battery cell and the battery module by suppressing expansion of the battery cell.

However, the above-described battery cell holder and a battery module including are only illustrative, and the problems that the present disclosure seeks to solve are not limited thereto.

Additional aspects will be set forth in part in the description which follows and, in part, will be apparent from the description, or may be learned by practice of the presented embodiments of the present disclosure.

According to one or more embodiments, a battery cell holder includes a partition walls defining an insertion hole suitable for inserting a a battery cell (e.g. into which a battery cell is inserted); support walls positioned between the partition walls; and protrusions on the partition walls. For example, each of the plurality of support walls has a protrusion thereon. A distance between a center of the insertion hole and the support walls is be less than a distance between the center of the insertion hole and the protrusions.

The support walls may contact the battery cell in an initial state, and the protrusions may not contact the battery cell in the initial state. In other words, the support walls may be configured to contact the battery cell in an initial state, and the protrusions may be configured to not contact the battery cell in the initial state.

In addition or in alternative, the protrusions may be configured to contact the battery cell when the battery cell expands.

At least a portion of the support walls may be convexly curved toward the insertion hole. In other words, at least a portion of the support wall may be outwardly curved from the middle of the support wall toward the insertion hole.

The support walls may include sections having different curvatures.

At least a portion of the support walls may include a first concave portion concave toward the insertion hole. In other words, at least a portion of the support walls may include a first concave portion inwardly curved to the middle of the support wall.

The first concave portion may not contact (is configured to not contact) the battery cell in an initial state, the first concave portion may be configured to contact the battery cell in response to the battery cell expanding.

In addition, or in alternative, a distance between the first concave portion and the center of the insertion hole may be less than a distance between the protrusion and the center of the insertion hole.

The support walls and the protrusions continuously extend in a height direction of the battery cell holder.

In addition, or in alternative, the protrusions may each be positioned at the center of the insertion hole in a first direction and in a second direction intersecting the first direction. In addition, or in alternative, the plurality of protrusions may each be positioned at the centers in a longitudinal direction of the plurality of partition walls extending in a first direction and in a second direction intersecting the first direction.

Each of the protrusions may have a flat surface protruding toward the insertion hole.

Each of the protrusions may have a curved surface protruding toward the insertion hole.

Each of the partition walls includes connection portions located at both ends of the partition wall in a longitudinal direction thereof and connected to the support wall, and a distance between the connection portion and the center of the insertion hole may be greater than a distance between the protrusion and the center of the insertion hole.

A cross-sectional area of the connection portion may gradually widen from a center of the partition wall toward the support wall.

The battery cell holder may further include auxiliary protrusions located on the connection portion.

A distance between the auxiliary protrusion and the center of the insertion hole may be greater than the distance between the protrusion and the center of the insertion hole.

The support walls may be at positions extending in two different directions from ends of each of the partition walls.

Two of the partition walls may be parallel to a first direction and two other partition walls may be parallel to a second direction intersecting the first direction, and the support wall may be located between the respective partition walls to define the insertion hole with a closed contour.

The support walls may define an opening, and the opening may be located between the insertion hole and another insertion hole.

According to one or more embodiments, a battery module may include a housing accommodating battery cells; a battery cell holder inside the housing and configured to accommodate the battery cells; a bus bar electrically connecting the battery cells together; and a cover covering the upper surface of the housing. The battery cell holder may include partition walls defining an insertion hole into which a battery cell from among the battery cells is inserted; support walls positioned between the partition walls; and protrusions on the partition walls. A distance between a center of the insertion hole and the support walls may be less than a distance between the center of the insertion hole and the protrusions.

Other aspects, features and advantages other than those described above are apparent from the detailed description, claims and drawings for carrying out the invention below.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded perspective view of a battery module;
FIG. 2 is a perspective view of a battery cell holder;
FIG. 3 is a cross-sectional view of a battery cell holder into which a battery cell is inserted;
FIG. 4 is a cross-sectional view of a battery cell holder without the battery cell inserted therein;
FIG. 5 is an enlarged view of the battery cell holder before expansion of the battery cells;
FIG. 6 is an enlarged view of protrusions of the battery cell holder before expansion of the battery cells;
FIG. 7 is an enlarged view of a support wall of the battery cell holder before expansion of the battery cells;
FIG. 8 is an enlarged view of the battery cell holder after expansion of the battery cells;
FIG. 9 is an enlarged view of the protrusions of the battery cell holder after expansion of the battery cells;
FIG. 10 is an enlarged view of the support wall of the battery cell holder after expansion of the battery cells;
FIG. 11 is an enlarged view of the support wall of the battery cell holder before expansion of the battery cells;
FIG. 12 is an enlarged view of the support wall of the battery cell holder after expansion of the battery cells;
FIG. 13 is an enlarged view of the protrusion of the battery cell holder before expansion of the battery cells;
FIG. 14 is an enlarged view of the protrusions of the battery cell holder after expansion of the battery cells;
FIG. 15 is an enlarged view of the battery cell holder before expansion of the battery cells;
FIG. 16 is an enlarged view of the battery cell holder after first expansion of the battery cells; and
FIG. 17 is an enlarged view of the battery cell holder after secondary expansion of the battery cells.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Some embodiments of the present disclosure and methods according thereto may be understood by referring to the detailed descriptions and drawings of the embodiments. The described embodiments may have various modifications and be implemented in different forms, and are not limited to the embodiments described herein. Additionally, some or all of the features of various embodiments of the present disclosure may be combined with each other. Each embodiment may be implemented independently or in relation to each other. The described embodiments are provided as examples to ensure that the present disclosure is complete and complete, and are also intended to completely convey the idea of the present disclosure to those skilled in the art to which the present disclosure pertains. This disclosure is subject to all modifications, equivalents, and substitutions within the technical scope of the present invention. Accordingly, processes, elements, and techniques that are not necessary to those skilled in the art for a complete understanding of the embodiments of the present disclosure may not be described.

Unless otherwise noted throughout the accompanying drawings and specification, the same reference signs, letters, or combinations thereof indicate the same components, so the descriptions already given are omitted. Additionally, in order to clearly explain the present invention, portions unrelated to the description have been omitted.

The relative sizes of elements, layers, and regions in the drawings may be exaggerated for clarity. The use of hatching and/or shading in the accompanying drawings generally serves to clarify boundaries between adjacent elements. Accordingly, the presence or absence of hatching or shading does not indicate a particular material, material property, dimension, proportion, commonality between figure elements, and/or other characteristics, properties, a preferred form or requirement for attributes of the elements unless specified.

Various embodiments are described herein with reference to embodiments and/or cross-sectional examples that are schematic illustrations of intermediate structures. The appearance of the drawing may therefore vary, for example as a result of manufacturing technology and/or tolerances. In addition, the specific structural or functional description disclosed in this specification is merely an example for explaining embodiments according to the concept of the present invention. Accordingly, the embodiments disclosed in this specification should not be construed as being limited to the shape of the illustrated area and include, for example, variations in shape due to manufacturing.

The areas shown in the drawings are schematic in nature and their shapes are not intended to be illustrative of the actual shape of the device areas and are not intended to be limiting the actual shape of the device areas In addition, as those skilled in the art will recognize, the described embodiments may be modified in various ways without departing from the idea or scope of the disclosure.

Numerous specific details are set forth in the specification to provide a thorough understanding of the various embodiments. However, various embodiments may be practiced without or including one or more of these specific details. In other instances, well-known structures and devices are shown in block diagram form to avoid unnecessarily obscuring the various embodiments.

To describe the relationship of one element or feature to another element or feature as illustrated in the drawings, spatially relative terms, such as "below", "above", "lower portion", "upper portion", may be used herein to facilitate description. Spatially relative terms are intended to include various orientations of the device in use or operation in addition to those shown in the drawings. For example, when the device in the drawings is turned over, other elements or features described as "below" or "bottom" will be facing "above" the other elements or features. Accordingly, as illustrative terms, "down" and "lower" may include both up and down directions. The device may be oriented in different directions (e.g., rotated 90 degrees or in other directions) and the spatially relative descriptions used herein should be interpreted accordingly. Similarly, when the first portion is described as being disposed "above" the second portion, this may mean that the first portion is disposed above or below the second portion.

In addition, the expression "viewed from the top" means that portion of an object is viewed from above, and the expression "in a schematic cross-section view" means when a schematic cross-section is taken by cutting a portion of an object vertically. The term "viewed from the side" means that the first object may be above, below or to the side of the second object and vice versa. Additionally, the terms "overlap" may include layer, lamination, surface, extension, covering, or partially covering, or any other suitable term that would be understood by one of ordinary skill in the art. The expression "does not overlap" may include meanings, such as "apart from" or "separated from" and any other suitable equivalents recognized and understood by those skilled in the art. The term "surface" may mean that a first object may directly or indirectly face a second object. When there is a third object between a first object and a second object, the first object and the second object face each other, but may be understood as indirectly opposing each other.

When an element, layer, region, or component is referred to as being "formed", "connected" or "coupled" to another element, it may be formed directly on a layer, region, or component, may be formed on another component, layer, region, or component, or may be indirectly formed on, connected to, or coupled to another component. In addition, it may collectively refer to direct or indirect combinations or connections of elements, layers, regions, or components and integral or non-integral combinations or connections of elements, layers, regions, or components so that one or more elements, layers, regions, or components may exist. For example, when an element, layer, region, or component is referred to as being "electrically connected" or "electrically coupled" to another element, layer, region, or component, it may be electrically connected or coupled directly to other element, layer, region, or component, or other elements, layers, regions, or components may be present. However, "direct connection" or "direct coupling" means that one component is directly connected or combined with another component without an intermediate component, or is on another component. In addition, in this specification, when portion of a layer, film, region, guide plate, etc. is formed in another portion, the formation direction is not limited to the upper direction, and includes that the portion is formed on the side or lower portion. Conversely, when a portion of a layer, film, region, guide plate, etc. is formed "under" another portion, this includes cases where there is another portion between the portion and the other portion as well as cases where the portion is "immediately below" another portion. In addition, other expressions that describe relationships between components, such as "between," "immediately between," "adjacent to," and "immediately adjacent to," may be interpreted similarly. In addition, when an element or layer is referred to as being "between" two elements or layers, it may be the only element between the two elements or layers, or there may be other elements in therebetween.

For the purposes of this specification, expressions such as "at least one or more" or "any one" do not limit the order of individual elements. For example, "at least one of X, Y and Z", "at least one of X, Y or Z", "at least one selected from the group consisting of X, Y and Z" may include X alone, Y alone, Z alone, or any combination of two or more of X, Y, and Z. Similarly, expressions such as "at least one of A and B" and "at least one of A and B" may include A, B or A and B. As used herein, the term "and/or" generally includes any combination of one or more related list items. For example, expressions such as "A and/or B" may include A, B, or A and B.

Terms, such as "first," "second," "third," and the like may be used herein to describe various elements, components, regions, layers, and/or cross-sections, but these elements, components, regions, layers, and/or cross-sections are not limited by these terms. These terms are used to distinguish one element, component, region, layer, or cross-section from another element, component, region, layer, or cross-section. Accordingly, a first element, component, region, layer or cross section described below may be referred to as a second element, component, region, layer or cross section without departing from the scope of the present invention. Describing an element as a "first" element may not require or imply the presence of a second or other element. Terms such as "first," "second," etc. may be used herein to distinguish different categories or sets of elements. For clarity, terms such as "first," "second," etc. may refer to "first category (or first set)," "second category (or second set)," etc., respectively.

The terms used in this application are only used to describe specific embodiments and are not intended to limit the invention. As used herein, singular terms are intended to include plural terms and plural terms are also intended to include the singular, unless the context clearly dictates otherwise. The terms "include," "comprise," and "have" when used herein are meant to designate the presence of specified features, integers, or steps. These expressions do not exclude the presence or addition of one or more other functions, steps, operations, components and/or groups thereof.

When one or more embodiments may be implemented differently, certain process sequences may be performed differently than the described order. For example, two processes described in succession may be performed substantially simultaneously or may be performed in an order opposite to that described.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations or within ± 30 %, ± 20 %, ± 10 %, or ± 5 % of a specified value.

Unless otherwise defined, all terms used herein, including technical or scientific terms, have the same meaning as commonly understood by a person of ordinary skill in the technical field to which the present invention pertains. Terms such as those defined in commonly used dictionaries should be construed as having a meaning consistent with their meaning in the context of the relevant technology and/or this specification, and unless explicitly defined herein, it is not to be interpreted in an idealized or overly formal sense.

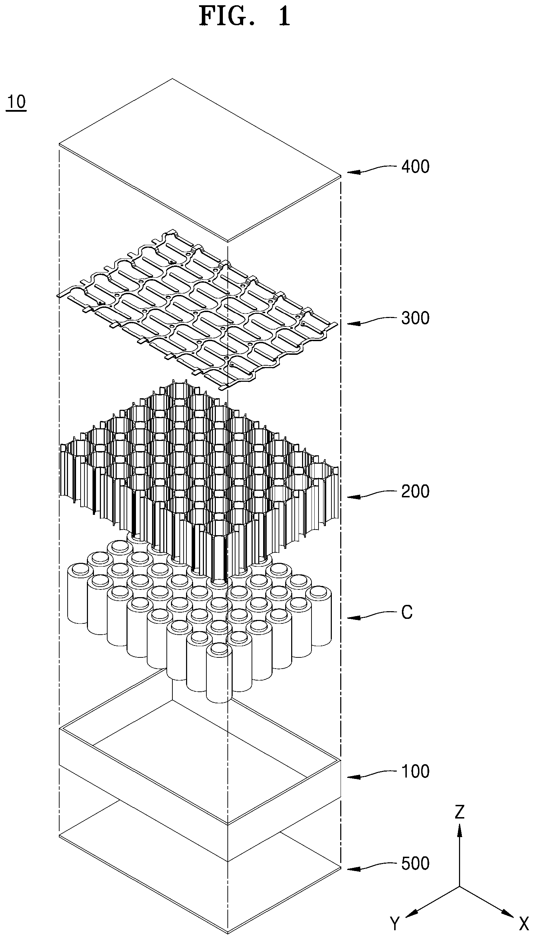

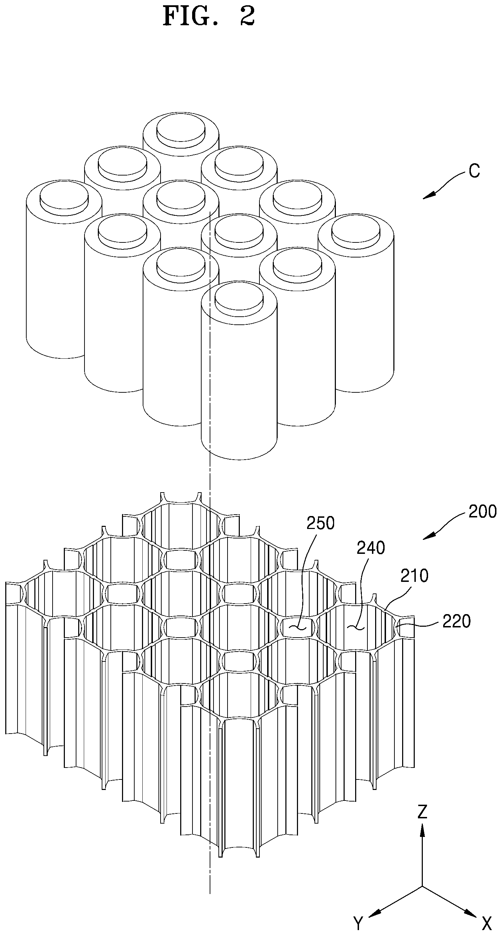

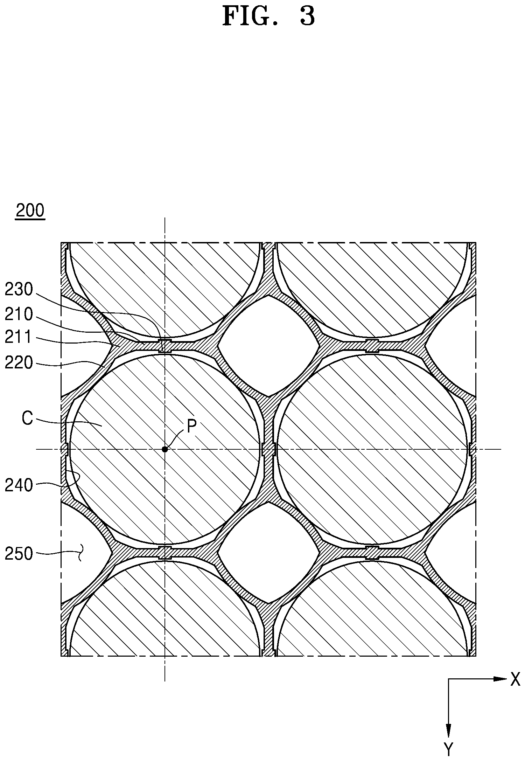

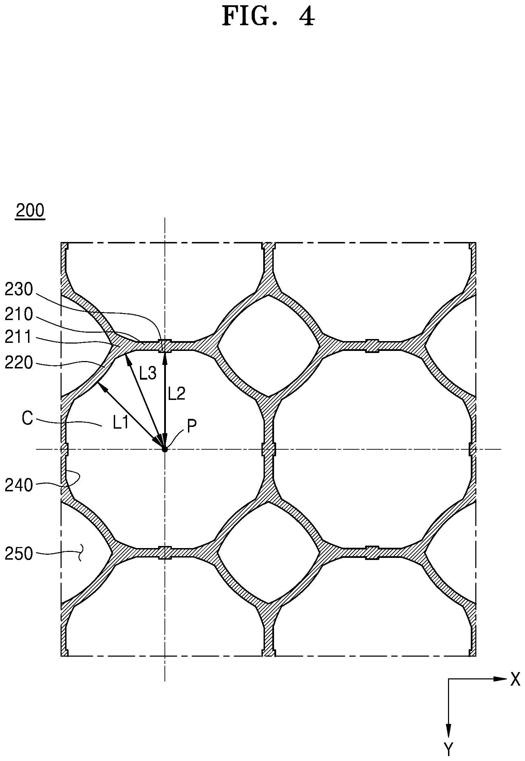

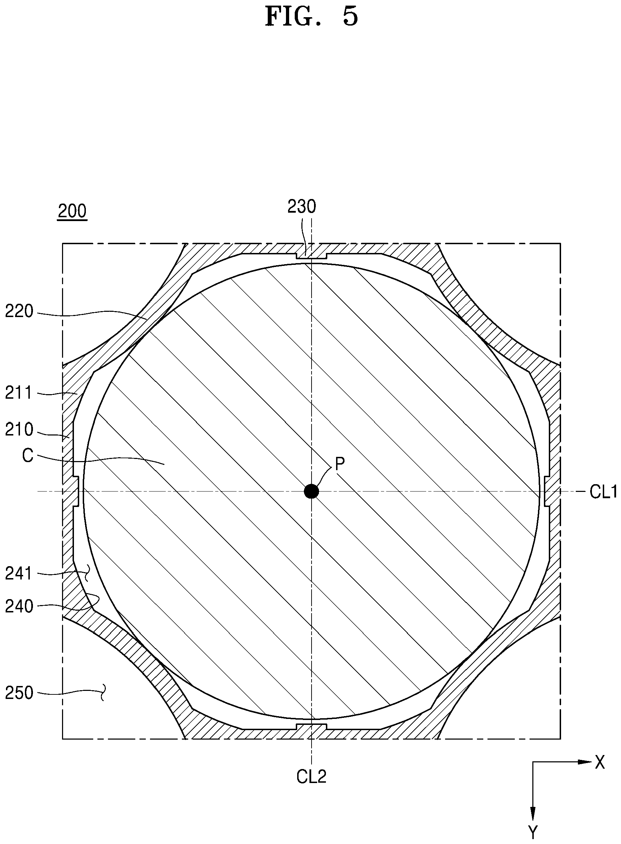

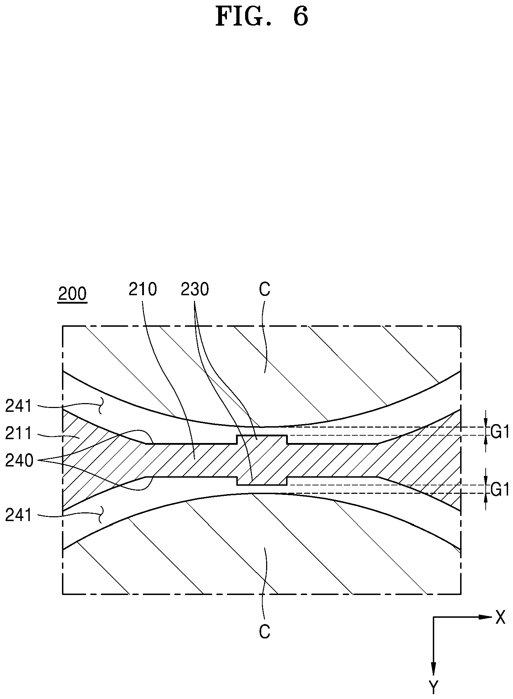

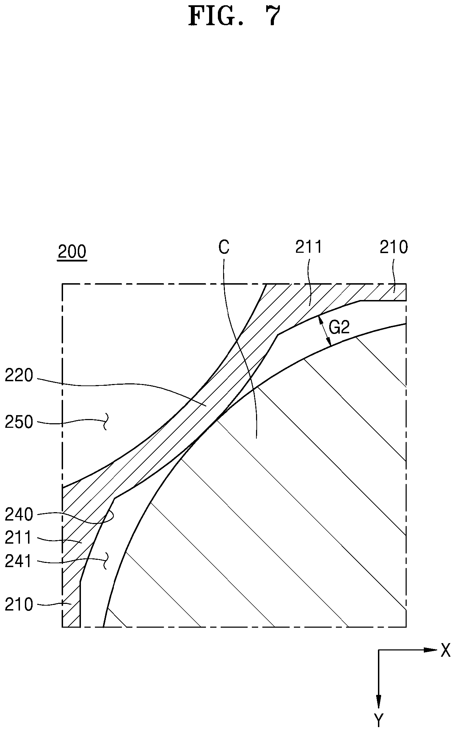

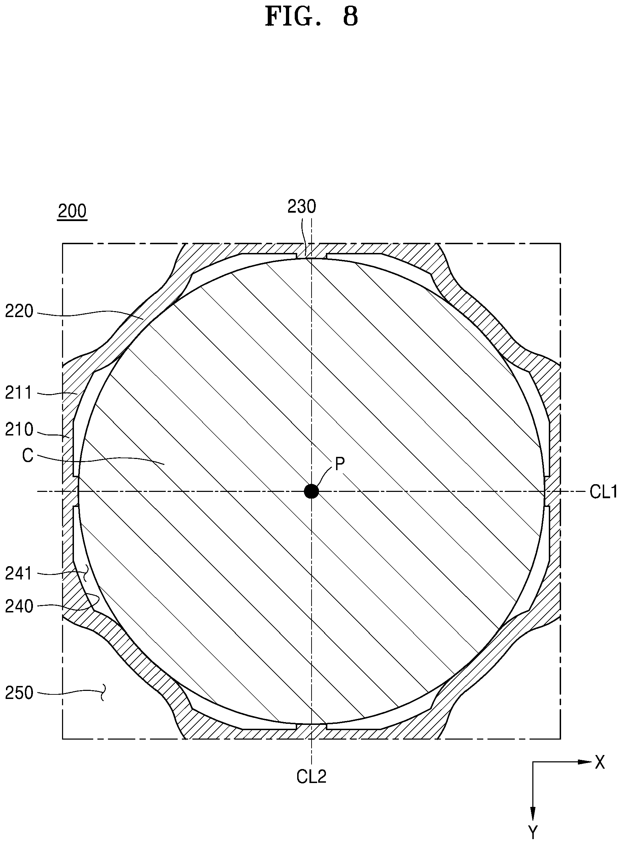

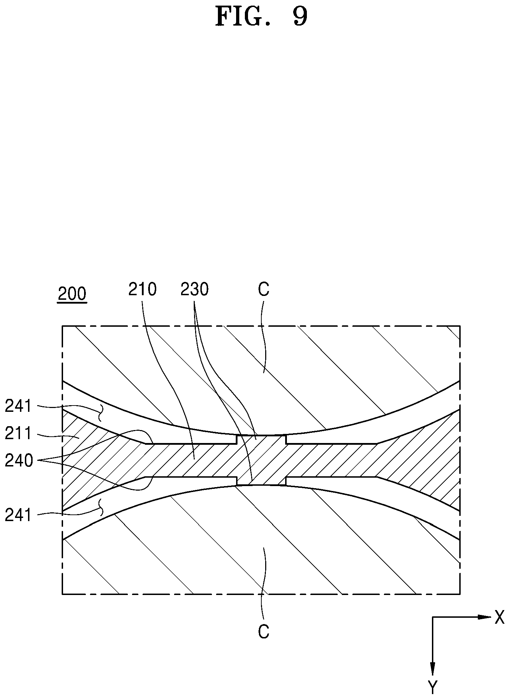

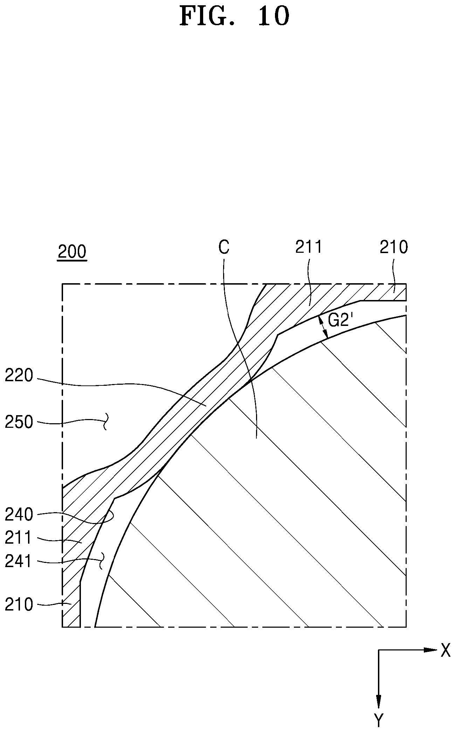

FIG. 1 is an exploded perspective view of a battery module 10, FIG. 2 is a perspective view of a battery cell holder 200, FIG. 3 is a cross-sectional view of a battery cell holder 200 in which battery cells C are accommodated, FIG. 4 is a cross-sectional view of a battery cell holder 200 without the battery cells C inserted therein, FIG. 5 is an enlarged view of the battery cell holder 200 before expansion of the battery cells C, FIG. 6 is an enlarged view of protrusions 230 of the battery cell holder 200 before expansion of the battery cells C, FIG. 7 is an enlarged view of a support wall 220 of the battery cell holder 200 before expansion of the battery cells C, FIG. 8 is an enlarged view of the battery cell holder 200 after expansion of the battery cells C, FIG. 9 is an enlarged view of the protrusions 230 of the battery cell holder 200 after expansion of the battery cells C, and FIG. 10 is an enlarged view of the support wall 220 of the battery cell holder 200 after expansion of the battery cells C.

The battery module 10 is a battery assembly in which the battery cells C are grouped into one group to protect the battery cells C from an external shock, heat, vibration, etc. The battery module 10 may include the battery cells C having a prismatic shape, a pouch shape, and/or a cylindrical shape. Hereinafter, the description is presented with respect to an embodiment in which the battery module 10 includes the battery cells C having a prismatic shape. The battery module 10 may be applied to large applications such as energy storage system (ESS) or small applications such as power tools. In one or more embodiments, the battery module 10 may be applied to an electric vehicle. The battery module 10 may be used alone or may be electrically connected to other battery modules 10 to form a battery pack.

The battery module 10 may include the battery cells C, a housing 100, the battery cell holder 200, a bus bar 300, a cover 400, and a cooling plate 500. In one or more embodiments, the battery module 10 may include the housing 100 that accommodates the battery cells C and the battery cell holder 200, the battery cell holder 200 located inside the housing 100 into which the battery cells C are inserted, a bus bar 300 electrically connecting the battery cells C together, and the cover 400 covering the upper surface of the housing 100.

As described above, the plurality of battery cells C may form the battery module 10, and the battery cells C may be, for example, cylindrical. The number and arrangement of the battery cells C may vary depending on the specifications and application of the battery module 10. In one or more embodiments, the plurality of battery cells C may be arranged in a rectangular shape with 8 battery cells in the horizontal direction (e.g., in the longitudinal direction of the battery module 10, X-axis direction) and 6 battery cells in the vertical direction (e.g., in the width direction of the battery module 10, in Y-axis direction), for a total of 48 battery cells. The number and arrangement of battery cells C are not limited thereto and may vary. Additionally, each battery cell C may have a diameter of approximately 20 mm or more, for example, approximately 46 mm or more.

The housing 100 may accommodate and support a plurality of battery cells C. In one or more embodiments, the housing 100 may have a rectangular parallelepiped shape with an empty interior, and a plurality of battery cells C and a battery cell holder 200 may be accommodated therein. The housing 100 may include a module bus bar for connection to other battery modules 10. Additionally, each housing 100 may include a connector connected to a battery monitoring system (BMS).

The battery cell holder 200 is configured to prevent the plurality of battery cells C accommodated in the housing 100 from moving, thereby preventing the battery cells C from being damaged or being separated from their designated positions. The battery cell holder 200 may be located inside the housing 100, and a plurality of battery cells C may be inserted in the battery cell holder 200. The battery cell holder 200 may be inside the housing 100 without clearance from the inner surface of the housing 100 such that the outer surface of the battery cell holder 200 is supported on the inner surface of the housing 100. The battery cell holder 200 may include a honeycomb structure including a plurality of openings and a plurality of structures dividing the openings therein. In one or more embodiments, the battery cell holder 200 may include a honeycomb structure in which a plurality of octagonal structures each including an opening are repeated in an array.

The battery cell holder 200 may have a shorter height than the battery cells C. Accordingly, when a battery cells C is inserted into the battery cell holder 200, a top of the battery cell C may protrude above the battery cell holder 200. The protruding portion of the battery cell C may be connected to the bus bar 300.

The battery cell holder 200 may include a partition wall 210, a support wall 220, and a protrusion 230. In one or more embodiments, the battery cell holder 200 may include a plurality of partition walls 210 that form or define the insertion hole 240 into which the battery cell C is inserted, a plurality of support walls 220 located between the plurality of partition walls 210, and a plurality of protrusions 230 on the plurality of partition walls 210. The distance between the center of the insertion hole 240 and one of the plurality of support walls 220 may be less than the distance between the center of the insertion hole 240 and one of the plurality of protrusions 230.

The partition wall 210 may partition the insertion hole 240 and may extend in a height direction (e.g., the height direction of the battery module 10, Z-axis direction). A plurality of partition walls 210 may be located around one insertion hole 240. In one or more embodiments, four partition walls 210 may be located around one insertion hole 240, and two partition walls 210 may be positioned to face each other with respect to the center of the insertion hole 240. Among the four partition walls 210, two partition walls 210 may be parallel or substantially parallel to each other and extend in a first direction (e.g., a longitudinal direction of the battery cell holder 200 or the X-axis direction in FIG. 3), and the other two partition walls 210 that are parallel or substantially parallel to each other may extend in a second direction (e.g., a width direction of the battery cell holder 200 or the Y-axis direction in FIG. 3) that intersects the first direction. A plurality of support walls 220 may be positioned between the plurality of partition walls 210. The partition wall 210 may extend continuously or discontinuously in the height direction (e.g., Z-axis direction) of the battery cell holder 200.

The ends of the partition wall 210 may be connected to the plurality of support walls 220. In one or more embodiments, as shown in FIG. 3, two support walls 220 may be connected to the ends of one partition wall 210. The two support walls 220 connected to the ends of the partition wall 210 may branch in different directions so that each of the two support walls 220 may define different insertion holes 240. In addition, one connected partition wall 210 may partition one insertion hole 240 on one side and another insertion hole 240 on the other side. In addition, the plurality of partition walls 210 and the plurality of support walls 220 may be connected to each other to define the insertion hole 240 on the inside. In one or more embodiments, the four partition walls 210 and the four support walls 220 may be connected to each other to form a substantially octagonal outline when viewed from a plan view.

The partition wall 210 may include a connection portion 211. The plurality of partition walls 210 may each include connection portions 211 connected to the support wall 220 at both ends in the longitudinal direction. As shown FIG. 3, the connection portion 211 is located at both ends of the partition wall 210 in the longitudinal direction and may be connected to the adjacent support wall 220. The connection portion 211 may have a shape having a cross-sectional area that gradually increases from the center of the partition wall 210 toward the support wall 220. Therefore, the connection strength between the partition wall 210 and the support wall 220 may be increased. The connection portion 211 may be spaced apart from the outer surface of the battery cell C when the battery cell C is inserted into the insertion hole 240. As shown in FIG. 4, a distance L3 between the inner surface of the connection portion 211 and the center point P of the insertion hole 240 may be longer than a distance L2 between the protrusion 230 and the center point P and longer than a distance L1 between the support wall 220 and the center point P. In one or more embodiments, as shown in FIG. 7, after the battery cell C is inserted into the insertion hole 240 and before expansion of the battery cell C, the connection portion 211 may be spaced apart from the outer surface of the battery cell C by a gap G2. Therefore, when inserting the battery cell C into the insertion hole 240, there sufficient free space 241 between the battery cell C and the partition wall 210 such that the battery cell C may be smoothly inserted into the insertion hole 240. In addition, even if the battery cell C expands and comes into contact with the support wall 220 and protrusions 230, the battery cell C may be easily taken out through the free space 241 between the connection portion 211 and the battery cell C. The connection portion 211 may extend in three directions and be connected to the partition wall 210 and the two support walls 220.

The partition wall 210 may not be in contact with the battery cell C. In one or more embodiments, as shown in FIG. 3, when the battery cell C is inserted into the battery cell holder 200 and has not yet expanded, the support wall 220 may be in contact with the battery cell C, and the partition wall 210 and the protrusion 230 may not be in contact with the battery cell C. Also, as shown in FIG. 8, when the battery cell C inserted into the battery cell holder 200 and the battery cell C expands, a portion of the battery cell C contacts the protrusion 230, and the partition wall 210 and the connection portion 211 may still not be in contact with the battery cell C. Therefore, when the battery cell C is inserted into the insertion hole 240 or removed from the insertion hole 240, sufficient clearance is formed between the battery cell C and the partition wall 210 so that the battery cell C may be easily taken out. However, when the battery cell C expands excessively, a portion of the battery cell C may come into contact with the partition wall 210.

The partition wall 210 may be located between two adjacent insertion holes 240. In one or more embodiments, as shown in FIGS. 3 and 4, one partition wall 210 in contact with one insertion hole 240 may contact another insertion hole 240 adjacent in the longitudinal direction (e.g., X-axis direction) of the battery cell holder 200 or another insertion hole 240 adjacent in the width direction (e.g. Y-axis direction) of the battery cell holder 200. That is, two adjacent insertion holes 240 may share one partition 210. The partition wall 210 may be located between adjacent insertion holes 240 in a direction intersecting the extending direction (e.g., longitudinal direction) of the partition wall 210. In one or more embodiments, the partition wall 210 extending in a first direction (e.g., the X-axis direction in FIG. 3) may be positioned between two adjacent insertion holes 240 in a second direction (e.g., the Y-axis direction in FIG. 3) intersecting the first direction. In one or more embodiments, a partition wall 210 extending in a second direction (e.g., Y-axis direction) may be located between two adjacent insertion holes 240 in a first direction (e.g., X-axis direction) intersecting the second direction. When four partition walls 210 are located around one insertion hole 240, the insertion hole 240 may be located between four insertion holes 240 adjacent to the four partition walls 210.

The support wall 220 may partition at least a portion of the insertion hole 240. The plurality of support walls 220 may be located around one insertion hole 240, and the support wall 220 may be located between two adjacent partition walls 210. The number of support walls 220 may be the same as the number of the partition walls 210. In one or more embodiments, there may be four support walls 220 for one insertion hole 240, and each support wall 220 may be connected to each connection portion 211 of two adjacent partition walls 210. In addition, two support walls 220 may extend in different directions from one connection portion 211. In an embodiment in which a plurality of partition walls 210 are positioned side by side in a first direction and a second direction, the plurality of support walls 220 may be positioned in directions that intersect each other in the first direction and the second direction. In one or more embodiments, the center line passing from the center point P of the insertion hole 240 to the longitudinal centers of the plurality of (e.g., four) partition walls 210 that partition the insertion hole 240 may extend in parallel (or substantially in parallel) in the first direction and the second direction, respectively. In addition, a line passing from the center point P of the insertion hole 240 to the center of the longitudinal direction of the support wall 220 may extend between the center lines, and may extend, for example, to form an approximately 45-degree angle. The support wall 220 may extend continuously or discontinuously in the height direction (e.g., Z-axis direction) of the battery cell holder 200. The support wall 220 may have a height equal to, lower than, or higher than that of the partition wall 210.

At least a portion of the plurality of support walls 220 may be curved inward toward the insertion hole 240. The support wall 220 may have a convexly curved shape toward the center point P of the insertion hole 240. At least a portion of the support wall 220 may protrude further into the insertion hole 240 than the partition wall 210. In one or more embodiments, the distance (e.g., the shortest distance) L1 between the support wall 220 and the center point P may be less than the distance L3 between the connection portion 211 and the center point P and less than the distance L2 between the protrusion 230 and the center point P. Therefore, the virtual circle extending from the center of the plurality of partition walls 210 that partition one insertion hole 240 may have a greater radius than the virtual circle extending from the center of the plurality of support walls 220 partitioning the insertion hole 240. That is, the virtual circle extending from the center of the plurality of partition walls 210 may surround a virtual circle extending from the center of the plurality of support walls 220.

The support wall 220 may contact the battery cell C when and/or while the battery cell C is inserted into the battery cell holder 200. As shown in FIGS. 3 and 5, when the battery cell C is inserted into the insertion hole 240, the support wall 220 may contact the battery cell C to support and secure the battery cell C, and may be configured to suppress expansion and deformation of the battery cell C. In one or more embodiments, four support walls 220 may be positioned at equal (or substantially equal) intervals and/or at equal (or substantially equal) angles with respect to the center point P to support the battery cell C in four directions. The support wall 220 may be in substantially line contact with the battery cell C. In one or more embodiments, the support wall 220 may be in substantially surface contact with the battery cell C. In one or more embodiments, when the battery cell C is first inserted into the insertion hole 240, the most protruding portion of the support wall 220 may be in line contact with the outer surface of the battery cell C. In response to the battery cell C expanding, the support wall 220 is pressed outward and the support wall 220 may come into surface contact with the battery cell C. Therefore, when the battery cell C is first inserted, the friction or resistance between the support wall 220 and the battery cell C may be relatively low, and when the battery cell C expands, the contact area between the support wall 220 and the battery cell C is expanded such that the expansion may be suppressed while stably supporting the battery cell C.

The distance between the two supporting walls 220 facing each other based on the center point P may be equal to or less than the diameter of the battery cell C. Therefore, when the battery cell C is inserted into the insertion hole 240, the support wall 220 may stably support the battery cell C. In one or more embodiments, the distance between the two support walls 220 may be greater than the diameter of the battery cell C. That is, in one or more embodiments, the support wall 220 may not contact the battery cell C when the battery cell C is first inserted, but may later contact the battery cell C when the battery cell C begins to expand. Therefore, when first inserting the battery cell C into the insertion hole 240, the battery cell C may be inserted more smoothly and stably.

The support wall 220 may partition the opening 250. In one or more embodiments, as shown in FIGS. 3 and 4, the plurality of support walls 220 may partition the opening 250 inside the insertion hole 240. In one or more embodiments, four support walls 220 may partition one opening 250. The support wall 220 may be located between the insertion hole 240 and the opening 250. With respect to the support wall, the insertion hole 240 may be located on one side of the support wall 220 and the opening 250 may be located on the other side of the support wall 220 (e.g., the insertion hole 240 and the opening 250 may be on opposite sides of the support wall 220). At least a portion of the plurality of support walls 220 that partition one opening 250 may be curved outward away from the opening 250. That is, the support wall 220 may have a convex shape toward the insertion hole 240 and a concave shape toward the opening 250.

Some of the plurality of support walls 220 formed on the battery cell holder 200 may contact the housing 100. In one or more embodiments, among the plurality of support walls 220, the support wall 220 located outside the battery cell holder 200 may extend outward from the insertion hole 240 as shown in FIGS. 1 and 2 and may not define other insertion holes 240 or openings 250. In addition, the support wall 220 located on the outside of the battery cell holder 200 may contact the inner surface of the housing 100 when the battery cell holder 200 is inserted into the housing 100. Accordingly, the battery cell holder 200 may be firmly supported by the housing 100 so that the battery cell holder 200 does not deviate (or substantially does not deviate) from the designated position. In addition, the insertion hole 240 may directly contact the housing 100 to prevent the battery cell C accommodated in the insertion hole 240 from receiving an external shock.

The support wall 220 in contact with the housing 100 may have a shorter length than the other support walls 220. As shown in FIG. 2, some of the support walls 220 located on an exterior or outer portion of the battery cell holder 200 may have a shorter length than the other support walls 220, for example, approximately half the length of the other support walls 220. Therefore, even if an external impact is applied to the housing 100, the risk of damage to the support wall 220 in contact with the housing 100 may be reduced. The support wall 220 in contact with the housing 100 may form an empty space between the inner surface of the housing 100 and the support walls 220. The empty space can increase the rigidity of the support wall 220.

The protrusion 230 may be formed on the partition wall 210 to support the battery cell C. In one or more embodiments, one or more protrusions 230 are on one surface of the partition wall 210 facing the insertion hole 240, and may selectively contact the battery cell C. The protrusion 230 may be on one or more of the plurality of partition walls 210 that partition one insertion hole 240. In one or more embodiments in which four partition walls 210 partition one insertion hole 240, the protrusion 230 may be formed on all four partition walls 210 or on one or more of the four partition walls 210. In an embodiment in which one protrusion 230 is on the partition wall 210, the protrusion 230 may have a distance L2 from the center point P of the insertion hole 240. The distance L2 may be longer than the distance L1 between the support wall 220 and the center point P, and may be shorter than the distance L3 between the connection portion 211 and the center point P. Therefore, the battery cell C may not contact the protrusion 230 before the battery cell C is first inserted into the insertion hole 240 and expanded. Afterwards, when the battery cell C expands, the protrusion 230 may contact the battery cell C to suppress expansion and deformation of the battery cell C. That is, the protrusion 230, in addition to the support wall 220, may secondarily suppress expansion and deformation of the battery cell C. In one or more embodiments in which a plurality of protrusions 230 are on the partition wall 210, the distance between the protrusion 230 located closest to the center point P of the insertion hole 240 and the center point P may be L2. In one or more embodiments, when the battery cell C is initially inserted into the insertion hole 240, the plurality of support walls 220 may be in contact with the battery cell C, and the plurality of protrusions 230 may not be in contact with the battery cell C. Additionally, the plurality of protrusions 230 may contact the battery cell C when the battery cell C expands.

The protrusion 230 may be located at the center (or substantially the center) of the partition wall 210. In one or more embodiments, the protrusion 230 may be located at the center (or substantially the center) of the partition wall 210 in the longitudinal direction and may protrude toward the insertion hole 240. In one or more embodiments, the plurality of protrusions 230 may be each positioned on the centers (or substantially the centers) in the longitudinal direction of the plurality of partition walls 2010 extending in a first direction (e.g., the X-axis direction in FIG. 4) and in a second direction (e.g., the Y-axis direction in FIG. 4) crossing the first direction. The two protrusions 230 facing each other with respect to the center point P of the insertion hole 240 may be symmetrical (or substantially symmetrical) to each other. As shown in FIGS. 5 and 8, two protrusions 230 may be located on a virtual line CL1 that passes through the center point P and extends in the first direction (e.g., the X-axis direction of FIGS. 5 and 8), and two protrusions 230 may be located on a virtual line CL2 that passes through the center point P and extends in the second direction (e.g., the Y-axis direction of FIGS. 5 and 8). Accordingly, as shown in FIG. 5, when the battery cell C is first inserted into the insertion hole 240, a plurality of support walls 220, for example, four support walls 220 may support the battery cell C at different positions. And when the battery cell C expands, the plurality of protrusions 230, for example, four protrusions 230 may support the battery cell C at different positions. In addition, the plurality of support walls 220 and a plurality of protrusions 230 located in one insertion hole 240 may be arranged at equal (or substantially equal) angles (e.g., regular intervals). In one or more embodiments, a virtual line passing through the center point P between the virtual line CL1 and the virtual line CL2 passes through the center of the longitudinal direction of the support wall 220, and therefore, the plurality of support walls 220 and the plurality of protrusions 230 may be arranged at an angle of approximately 45 degrees with respect to the center point P.

The protrusion 230 may extend continuously or discontinuously in the height direction (e.g., Z-axis direction) of the battery cell holder 200. The surface of the plurality of protrusions 230 protruding toward the insertion hole 240 may be flat (planar). In one or more embodiments, the protrusion 230 may have a rectangular cross-section (e.g., a rectangular cross-section on the XY plane). However, the shape of the protrusion 230 is not particularly limited, and a portion of the protrusion 230 may have a curved shape or a polygonal shape, such as a triangle, square, or pentagon. One or more protrusions 230 may be formed on one side and one other side of one partition wall 210, respectively. That is, based on one partition wall 210 located between two adjacent insertion holes 240, protrusions 230 may be formed on one side and the other surface (e.g., opposite surfaces or sides) of the partition wall 210. In addition, each protrusion 230 may be positioned symmetrically (or substantially symmetrically) with respect to the partition wall 210.

The protrusion 230 may be spaced apart from the outer surface of the battery cell C by a gap G1. As shown in FIG. 6, when the battery cell C is first inserted into the insertion hole 240, the protrusion 230 does not contact the battery cell C and may be spaced apart by a gap G1. Afterwards, when the battery cell C expands, the protrusion 230 contacts the outer surface of the battery cell C, and the protrusion 230 may support the battery cell C to prevent the battery cell C from being excessively expanded and deformed.

The insertion hole 240 is an area that accommodates the battery cell C, and is an area in which the battery cell C may be inserted and removed. The insertion hole 240 may be formed or defined by (bounded by) a plurality of partition walls 210 and a plurality of support walls 220. In one or more embodiments, as shown in FIGS. 3 and 4, the plurality of partition walls 210 and the plurality of support walls 220 may be located around one insertion hole 240, and an insertion hole 240 may be formed inside the plurality of partition walls 210 and the plurality of support walls 220. In one or more embodiments, four partition walls 210 and four support walls 220 are alternately positioned to form a closed contour, and the insertion hole 240 may be formed inside the four partition walls 210 and four support walls 220. The shape of the insertion hole 240 may correspond to the outline formed by the partition walls 210, the support walls 220, and the protrusion(s) 230. In one or more embodiments, the insertion hole 240 has an overall shape close to an octagon, and an edge corresponding to the support wall 220 may have an inwardly curved shape. In addition, a portion of the edge corresponding to the partition wall 210 may have a depressed shape due to the protrusion 230.

The insertion holes 240 may be arranged in a plurality of rows and columns. In one or more embodiments, as shown in FIG. 2, a plurality of insertion holes 240 may be arranged in the longitudinal direction (e.g., X-axis direction) of the battery cell holder 200 and the width direction (e.g., Y-axis direction) of the battery cell holder 200.

The openings 250 may be located between the plurality of insertion holes 240 and may serve to buffer external shock. The opening 250 may be formed or defined (bounded by) a plurality of support walls 220. In one or more embodiments, as shown in FIGS. 3 and 4, a plurality of support walls 220 may be positioned around one opening 250, and the opening 250 may be formed inside the plurality of support walls 220. In one or more embodiments, the four support walls 220 form a closed outline or border, and an opening 250 may be formed inside the four support walls 220. The shape of the opening 250 may correspond to the outline formed by the support wall 220. In one or more embodiments, the opening 250 may have an overall shape close to a square, but each corner may have a shape that is convexly curved outward. Each opening 250 may be located between a plurality of adjacent insertion holes 240. For example, one opening 250 may be located between four insertion holes 240. Therefore, the center of the opening 250 may be located on a virtual line passing through the center point P of two insertion holes 240 adjacent to each other in the diagonal direction (e.g., between the X-axis direction and the Y-axis direction). In this way, the battery cell holder 200 has a honeycomb structure in which the plurality of insertion holes 240 and a plurality of openings 250 are alternately formed and each opening 250 is located between adjacent insertion holes 240, thereby effectively protecting the battery cell C from external impacts and increasing the overall rigidity of the battery cell holder 200.

Hereinafter, descriptions are given before and after the battery cell C is inserted into the battery cell holder 200 and then expanded.

As shown in FIG. 5, when the battery cell C is first inserted into the insertion hole 240 of the battery cell holder 200, the outer surface of the battery cell C may contact the support wall 220. The battery cell C may contact the support wall 220 at a plurality of different points or portions. In one or more embodiments, in which four support walls 220 are formed around one insertion hole 240, the battery cell C may contact the support walls 220 at four different points or portions. The insertion position of the battery cell C is guided by the support wall 220, and the position of the battery cell C does not change while the battery cell C is inserted, which may primarily suppress expansion and deformation of the battery cell C. In this state, the protrusion 230 is spaced apart from the battery cell C by a gap G1 (see Figure 6), and the connection portion 211 is spaced apart from the battery cell C by the gap G2 (see FIG. 7). Accordingly, a free space 241 may be formed between the battery cell C, the partition wall 210, and the protrusion 230. In addition, the support wall 220 may be substantially in line contact or substantially in surface contact with the battery cell C.

As shown in FIG. 8, when the battery cell C expands, the battery cell C may contact the protrusion 230 while pressing the support wall 220 outward. The battery cell C may contact the protrusion 230 at a plurality of different points or portions. In one or more embodiments in which four partition walls 210 are formed around one insertion hole 240 and one protrusion 230 is on each partition wall 210, the battery cell C may contact the four protrusions 230. The battery cell C may contact the four support walls 220 and the four protrusions 230, for a total of eight different contact points. The protrusion 230 may secondarily suppress expansion and deformation of the battery cell C. In this state, the protrusion 230 contacts the battery cell C without a gap (see FIG. 9), and the connection portion 211 is spaced apart from the battery cell C by a gap G2' (see FIG. 10). The free space 241 formed between the battery cell C, the partition wall 210, and the protrusion 230 may be reduced, but may still exist even after the battery cell C expands. In addition, the support wall 220 may be partially deformed to correspond to the shape of the expanded battery cell C. In one or more embodiments, as shown in FIG. 10, a portion of the support wall 220 may be curved outward, for example, convexly toward the opening 250, to correspond to the curvature of the outer surface of the battery cell C.

The bus bar 300 may electrically connect a plurality of battery cells C together. In one or more embodiments, the bus bar 300 may connect a plurality of battery cells C in series and/or parallel by connecting the negative electrode and the positive electrode of the plurality of battery cells C. The bus bar 300 may be made of an electrically conductive material such as metal. The bus bar 300 may be located on an upper portion of the plurality of battery cells C. In one or more embodiments in which a plurality of battery cells C are inserted into the battery cell holder 200, the bus bar 300 may be positioned to contact the upwardly exposed electrodes of the battery cells C. In one or more embodiments, the bus bar 300 may be located below or both above and below the plurality of battery cells C. When the battery module 10 is combined with other battery modules 10 to form a battery pack, the bus bar 300 may be connected to the other battery modules 10 through the pack bus bar.

The cover 400 may be located on the plurality of battery cells C and cover the open upper surface of the housing 100. The cover 400 may have a rectangular shape corresponding to the shape of the housing 100 and may be detachably coupled to the housing 100. In one or more embodiments, the cover 400 may open and close the housing 100 through a hinge or the like.

The cooling plate 500 may be located on one side of the battery module 10 and may cool a plurality of battery cells C. In one or more embodiments, the cooling plate 500 is made of a material with higher thermal conductivity than the battery cells C and other components of the battery module 10 such that heat generated from the plurality of battery cells C may be discharged to the outside of the battery module 10. The cooling plate 500 may be located on the outer bottom surface of the housing 100 and/or on the inner bottom surface of the housing 100 and may be in direct contact with the plurality of battery cells C.

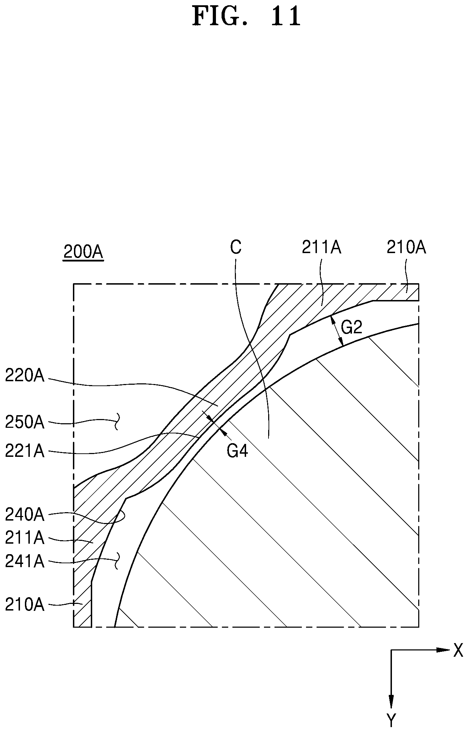

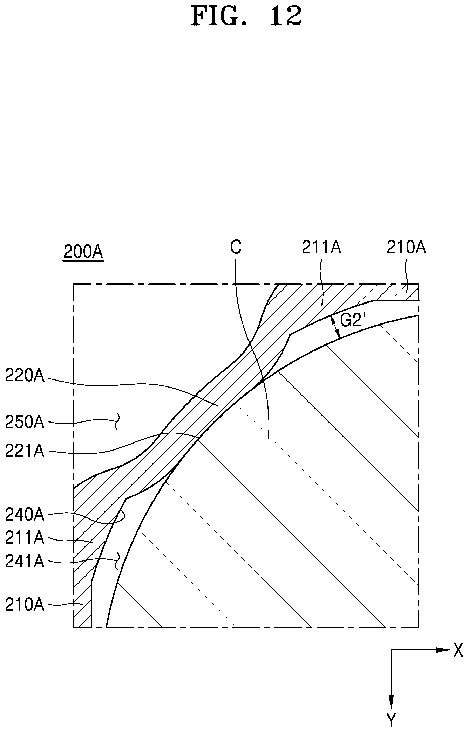

FIG. 11 is an enlarged view of the support wall of the battery cell holder 200A before the battery cell C expands, and FIG. 12 is an enlarged view of a support wall 220A of the battery cell holder 200A after the battery cell C has expanded. FIGS. 11 and 12 may partially enlarge and show the battery cell holder 200A included in the battery module 10 of FIGS. 1 to 10, and the remaining configuration of the battery module 10 may be the same. The battery cell holder 200A includes a partition wall 210A, the support wall 220A, a protrusion, an insertion hole 240A, and an opening 250A, and configurations thereof not separately described hereinafter may be the same as those of the battery cell holder 200 of FIGS. 1 to 10.

At least a portion of the support wall 220A may have a shape curved toward the outside rather than the inside of the insertion hole 240A. A portion of the support wall 220A may be curved toward the inside of the insertion hole 240A, and the remaining portion of the support wall 220A may have a shape curved toward the outside of the insertion hole 240A, that is, toward the opening 250A. As shown in FIG. 11, the support wall 220A may include a first concave portion 221A. The first concave portion 221A may have a concave shape to correspond (or substantially correspond) to the outer surface of the battery cell C. That is, in one or more embodiments, the plurality of support walls 220A may include a plurality of sections having different curvatures. Before the battery cell C expands, the first concave portion 221A may be spaced apart from the outer surface of the battery cell C by a distance G4 and may not be in contact with the battery cell C. In this state, the connection portion 211A may be spaced apart from the battery cell C by the gap G2. Afterwards, when the battery cell C expands, the outer surface of the battery cell C may be supported by at least a portion of the first concave portion 221A. In addition, the gap between the connection portion 211A and the battery cell C may be reduced to G2'. Because the first concave portion 221A has a concave shape corresponding (or substantially corresponding) to the outer surface of the battery cell C, the contact area between the support wall 220A and the battery cell C may be increased. Therefore, the support wall 220A supports the battery cell C more firmly, thereby maintaining the position of the battery cell C and preventing (or at least mitigating) further expansion and suppression of the battery cell C. In one or more embodiments, the distance between the first concave portion 221A and the center of the insertion hole 240A may be shorter than the distance between the protrusion and the center of the insertion hole 240A. Therefore, when the battery cell C is initially inserted into an insertion hole 240C, the first concave portion 221A may not contact the battery cell C, but may contact the battery cell C as the battery cell C expands.

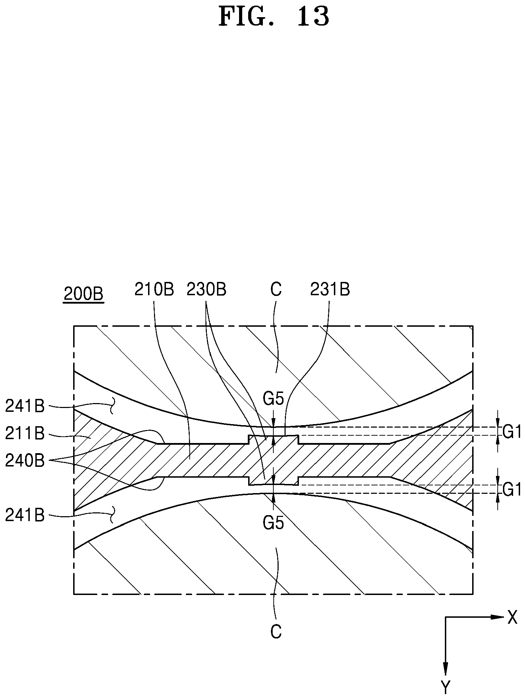

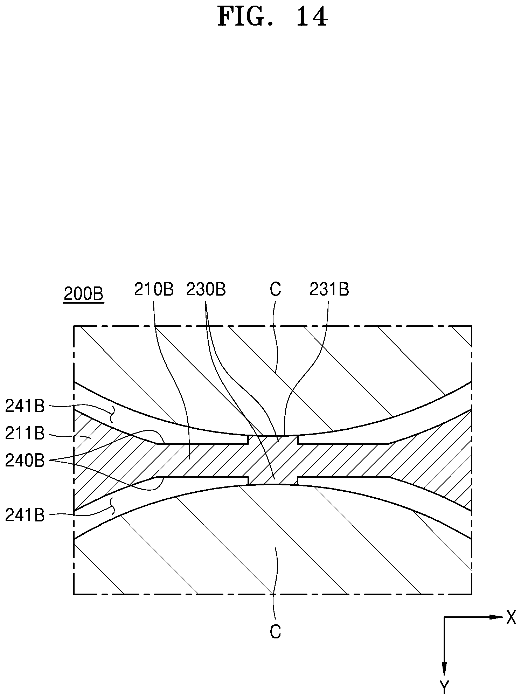

FIG. 13 is an enlarged view of a protrusion 230B of a battery cell holder 200B before the battery cell C expands, and FIG. 14 is an enlarged view of the protrusions of the battery cell holder 200B after the battery cell C has expanded; FIGS. 13 and 14 partially enlarge the battery cell holder 200B included in the battery module 10 of FIGS. 1 to 10, and the remaining configuration of the battery module 10 may be the same. The battery cell holder 200B includes a partition wall 210B, a support wall, the protrusion 230B, an insertion hole 240B, and an opening, and configurations thereof not separately described hereinafter may be the same as those of the battery cell holder 200 of FIGS. 1 to 10.

At least a portion of the protrusion 230B may have a curved shape. In one or more embodiments, the surface of the plurality of protrusions 230B that protrudes toward the insertion hole 240B may be curved. At least a portion of the protrusion 230B may have a shape curved toward the outside of the insertion hole 240B, for example, toward the opening 250B. As shown in FIG. 13, the protrusion 230B may include a second concave portion 231B. The second concave portion 231B may have a concave shape to correspond (or substantially correspond) to the outer surface of the battery cell C. That is, in one or more embodiments, the surface of the protrusion 230B facing the battery cell C may have a curved surface rather than a flat surface. Before the battery cell C expands, the second concave portion 231B may be spaced apart from the outer surface of the battery cell C by a distance G5 and may not be in contact with the battery cell C. The gap G5 is the distance between the center of the second concave portion 231B and the battery cell C, and may be the longest distance between the second concave portion 231B and the battery cell C. In addition, the furthest protruding ends of the second concave portion 231B may be spaced apart from the outer surface of the battery cell C by a distance G1. In this state, the battery cell C may be in contact with the support wall or may not be in contact with the support wall. Afterwards, when the battery cell C expands, the outer surface of the battery cell C may be supported by at least a portion of the second concave portion 231B. Because the second concave portion 231B has a concave shape corresponding (or substantially corresponding) to the outer surface of the battery cell C, the contact area between the protrusion 230B and the battery cell C may be expanded. Accordingly, the protrusion 230B supports the battery cell C more firmly, thereby maintaining the position of the battery cell C and preventing (or at least mitigating) further expansion and suppression of the battery cell C.

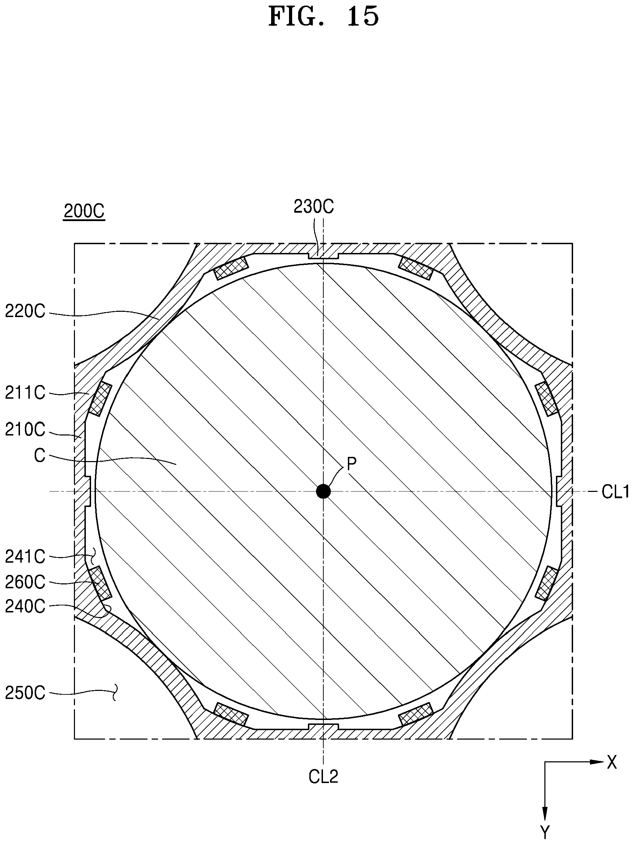

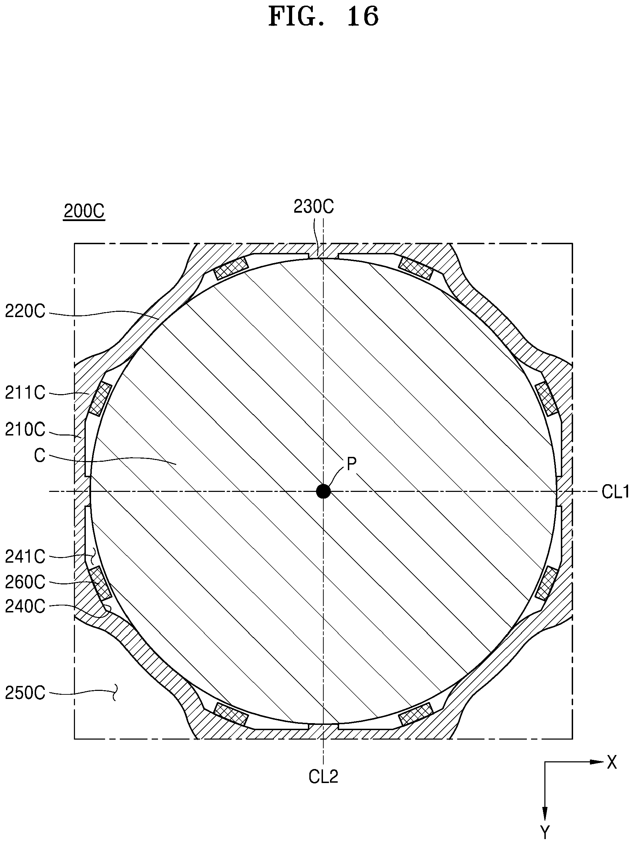

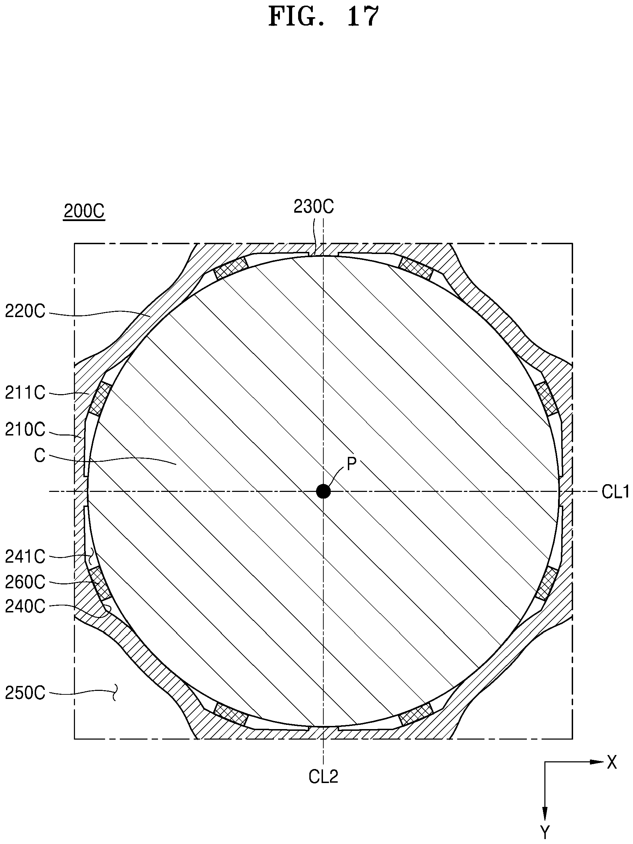

FIG. 15 is an enlarged view of the battery cell holder 200C before the battery cell C expand, FIG. 16 is an enlarged view of the battery cell holder 200C after the first expansion of the battery cell C, and FIG. 17 is an enlarged view of the battery cell holder 200C after secondary expansion of the battery cell C. FIGS. 15 and 16 partially enlarge the battery cell holder 200C included in the battery module 10 of FIGS. 1 to 10, and the remaining configuration of the battery module 10 may be the same. The battery cell holder 200C may include a partition wall 210C, a support wall 220C, a protrusion 230C, the insertion hole 240C, and an opening 250C, and configurations thereof not separately described hereinafter may be the same as those of the battery cell holder 200 of FIGS. 1 to 10.

The battery cell holder 200C may include a plurality of auxiliary protrusions 260C. One or more auxiliary protrusions 260C may be located on the battery cell holder 200C to suppress further expansion and deformation of the battery cell C. In one or more embodiments, the plurality of auxiliary protrusions 260C may be located at each connection portion 211C of the partition wall 210C. The auxiliary protrusion 260C may be located between the adjacent support wall 220C and the protrusion 230C and may protrude inward toward the center point P of the insertion hole 240C. The distance between the auxiliary protrusion 260C and the battery cell C may be greater than the distance between the protrusion 230C and the battery cell C. Therefore, when the battery cell C is first inserted and the battery cell C expands and first contacts the protrusion 230C, the auxiliary protrusion 260C may not contact the battery cell C. Afterwards, when the battery cell C expands further, the auxiliary protrusion 260C may contact the battery cell C to suppress (or at least mitigate) further expansion and deformation of the battery cell C.

The auxiliary protrusion 260C may have a polygonal cross-sectional shape, such as a triangular, square, or pentagonal cross-sectional shape. In one or more embodiments, at least a portion of the auxiliary protrusion 260C may have a curved shape. In one or more embodiments, the side of the auxiliary protrusion 260C facing the insertion hole 240C is curved concavely, so that when the battery cell C expands, at least a portion of the outer surface of the battery cell C may be supported by the auxiliary protrusion 260C. The auxiliary protrusion 260C may be located at the center (or substantially the center) of the support wall 220C and the protrusion 230C in the circumferential direction. The auxiliary protrusion 260C may be made of the same material or a different material as the protrusion 230C. In one or more embodiments, the auxiliary protrusion 260C may be made of a material with greater rigidity than the protrusion 230C, or may be made of a material with lower rigidity than the protrusion 230C. The auxiliary protrusion 260C may extend continuously or discontinuously in the height direction (e.g., Z-axis direction) of the battery cell holder 200C.

The battery cell holders 200, 200A, 200B, and 200C described above are not mutually exclusive embodiments, and at least some of the configurations may be combined with each other. That is, at least one of the partition wall 210, the support wall 220, the protrusion 230, the insertion hole 240, and the opening 250 of the battery cell holder 200, the partition wall 210A, the support wall 220A, the protrusion, the insertion hole 240A, and the opening 250A of the battery cell holder 200A, and the partition wall 210B, the support wall 250B, the protrusion, the insertion hole 240B, and an opening of the battery cell holder 200B, and the partition wall 210C, the support wall 220C, the protrusion 230C, the insertion hole 240C, and the opening 250C of the battery cell holder 200C may be combined with each other in a variety of different suitable combinations. In one or more embodiments, the support wall 220A of the battery cell holder 200A and the protrusion 230B of the battery cell holder 200B may be combined. In one or more embodiments, the support wall 220A of the battery cell holder 200A and the auxiliary protrusion 260C of the battery cell holder 200C may be combined. In one or more embodiments, the protrusion 230B of the battery cell holder 200B and the auxiliary protrusion 260C of the battery cell holder 200C may be combined. In one or more embodiments, the support wall 220A of the battery cell holder 200A, the protrusion 230B of the battery cell holder 200B and the auxiliary protrusion 260C of the battery cell holder 200C may be combined.

A battery cell holder and a battery module including a battery cell holder that is configured to suppress (or at least mitigate) expansion and deformation of battery cells. By including a support wall and protrusions, the battery cell holder may guide smooth insertion of the battery cell and at the same time effectively suppress (or at least mitigate) expansion and deformation of the battery cell.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery cell holder (200, 200A, 200B, 200C) comprising:
a plurality of partition walls (210, 210A, 210B, 210C) defining an insertion hole (240, 240A, 240B, 240C) for accommodating a battery cell;
a plurality of support walls (220, 220A, 220C) between the plurality of partition walls (210, 210A, 210B, 210C); and
a plurality of protrusions (230, 230B, 230C) on the plurality of partition walls (210, 210A, 210B, 210C),
wherein a distance between a center of the insertion hole (240, 240A, 240B, 240C) and the plurality of support walls (220, 220A, 220C) is less than a distance between the center of the insertion hole (240, 240A, 240B, 240C) and the plurality of protrusions (230, 230B, 230C).

2. The battery cell holder (200, 200A, 200B, 200C) of claim 1, wherein:
(i) the plurality of support walls (220, 220A, 220C) is configured to contact the battery cell in an initial state, and wherein the plurality of protrusions (230, 230B, 230C) is configured to not contact the battery cell in the initial state and/or
(ii) the plurality of protrusions (230, 230B, 230C) is configured to contact the battery cell in response to the battery cell expanding.

3. The battery cell holder (200, 200A, 200B, 200C) of claims 1 or 2, wherein at least a portion of each of the plurality of support walls (220A, 220C) is convexly curved toward the insertion hole (240, 240A, 240B, 240C).

4. The battery cell holder (200, 200A, 200B, 200C) of one of the preceding claims, wherein each of the plurality of support walls (220A, 220C) comprises a plurality of sections having different curvatures.

5. The battery cell holder (200, 200A, 200B, 200C) of claim 4, wherein at least a portion of each of the plurality of support walls (220A, 220C) includes a first concave portion (221A) concave toward the insertion hole (240, 240A, 240B, 240C).

6. The battery cell holder (200, 200A, 200B, 200C) of claim 5, wherein:
(i) the first concave portion (221A) is configured to not contact the battery cell in response to the battery cell having an initial configuration, and wherein the first concave portion (221A) is configured to contact the battery cell in response to the battery cell expanding; and/or
(ii) a distance between the first concave portion (221A) and the center of the insertion hole (240, 240A, 240B, 240C) is less than a distance between the protrusion (230, 230B, 230C) and the center of the insertion hole (240, 240A, 240B, 240C).

7. The battery cell holder (200, 200A, 200B, 200C) of at least one of the preceding claims, wherein:
(i) the plurality of support walls (220A, 220C) and the plurality of protrusions (230, 230B, 230C) continuously extend in a height direction of the battery cell holder (200, 200A, 200B, 200C); and/or
(ii) wherein the plurality of protrusions (230, 230B, 230C) are each positioned at the centers in a longitudinal direction of the plurality of partition walls (210, 210A, 210B, 210C) extending in a first direction and in a second direction intersecting the first direction.

8. The battery cell holder (200, 200A, 200B, 200C) of at least one of the preceding claims, wherein:
(i) the plurality of protrusions (230, 230B, 230C) each have a flat surface protruding toward the insertion hole (240, 240A, 240B, 240C); or
(ii) the plurality of protrusions (230, 230B, 230C) each have a curved surface protruding toward the insertion hole (240, 240A, 240B, 240C).

9. The battery cell holder (200, 200A, 200B, 200C) of at least one of the preceding claims,
wherein each partition wall (210A, 210B, 210C) of the plurality of partition walls (210A, 210B, 210C) comprises connection portions (211, 211A) located at both ends of the each partition wall (210A, 210B, 210C) in a longitudinal direction and connected to the support wall (220A, 220C), and
wherein a distance between the connection portion (211, 211A) and the center of the insertion hole (240, 240A, 240B, 240C) is greater than a distance between one of the plurality of protrusions (230, 230B, 230C) and the center of the insertion hole (240, 240A, 240B, 240C).

10. The battery cell holder (200, 200A, 200B, 200C) of claim 9, wherein a cross-sectional area of the connection portion (211, 211A) gradually widens in a direction from a center of the partition wall (210A, 210B, 210C) toward the support wall (220A, 220C).

11. The battery cell holder (200, 200A, 200B, 200C) of one of claim 9 or 10, wherein the battery cell holder (200, 200A, 200B, 200C) further comprises a plurality of auxiliary protrusions (260C) on the connection portion (211, 211A).

12. The battery cell holder (200, 200A, 200B, 200C) of claim 11, wherein a distance between each auxiliary protrusion (260C) of the plurality of auxiliary protrusions (260C) and the center of the insertion hole (240, 240A, 240B, 240C) is greater than the distance between one of the plurality of protrusions (230, 230B, 230C) and the center of the insertion hole (240, 240A, 240B, 240C).

13. The battery cell holder (200, 200A, 200B, 200C) of at least one of the preceding claims, wherein the plurality of support walls (220A, 220C) is at positions extending in two different directions from ends of each of the plurality of partition walls (210A, 210B, 210C).

14. The battery cell holder (200, 200A, 200B, 200C) of at least one of the preceding claims,
wherein two of the plurality of partition walls (210A, 210B, 210C) are parallel to one direction and another two of the plurality of partition walls (210A, 210B, 210C) are parallel to another direction intersecting the one direction, and
wherein the plurality of support walls (220A, 220C) and the plurality of partition walls (210A, 210B, 210C) define the insertion hole (240, 240A, 240B, 240C) with a closed contour.

15. A battery module (10) comprising:
a housing (100) accommodating a plurality of battery cells;
a battery cell holder (200, 200A, 200B, 200C) inside the housing (100), the battery cell holder (200, 200A, 200B, 200C) accommodating the plurality of battery cells;
a bus bar (300) electrically connecting the plurality of battery cells; and
a cover (400) covering an upper surface of the housing (100),
wherein the battery cell holder (200, 200A, 200B, 200C) is one of the battery cell holders (200, 200A, 200B, 200C) as claimed in any one of claims 1 to 14.
